# EUROPEAN PATENT APPLICATION

(11) **EP 1 622 157 A2**
(43) Date of publication of application: **01.02.2006**
(21) Application number: 05016092.8
(22) Date of filing: 25.07.2005
(51) Int. Cl.: G11B 33/04

(54) **Disk storage unit**

(30) Priority: 27.07.2004 JP 2004218562
(71) Applicant: FUJI PHOTO FILM CO., LTD., Minami-Ashigara-shi, Kanagawa-ken (JP)
(72) Inventor: Ikegami, Akihiko, Minato-ku Tokyo (JP); Taga, Kazuaki, Minato-ku Tokyo (JP); Lee, SunHee, Minato-ku Tokyo (JP)
(74) Representative: Klunker . Schmitt-Nilson . Hirsch

(57) **Abstract**

A disk storage unit (U) houses a plurality of sheet-like protective sleeves .(11), each for storing a disk (10) therein. Punched apertures (15, 15) are provided in the protective sleeves (11), to enable them to be bound in a binder type filing implement (20, 20'). An edge (11b) of each of the plurality of protective sleeves (11) is removably affixed to a case (1) by means of an adhesive, which can be peeled off, for example. The disk storage unit (U) enables storage of a great number of recording media disks (10) in a limited space.

## Description

### BACKGROUND OF THE INVENTION

### Field of the Invention

The present invention relates to a disk storage unit, and particularly to a disk storage unit for storing recording media disks, such as CD's and DVD's.

### Description of the Related Art

A conventional CD storage case which is commonly in use (hereinafter, referred to as "standard case") comprises: a case main body, of which the entirety of one side is an open surface, for storing a disk; and a lid, which is linked to the case main body by a hinge so as to open and close the open surface. A circular disk clamper, for elastically engaging a central aperture of the disk to detachably hold the disk, is provided at the central portion of the inner surface of the case main body.

However, the standard case is capable of holding only a single disk therein. Therefore, a problem is arising in that as the number of disks increases, storage space is difficult to secure.

In response to this problem, pluralities of disks are stored in sheet-like protective sleeves made of nonwoven cloth, paper, plastic and the like, which are then stored within a single case. Thereby, space is saved and the cost of the case is reduced. However, if the number of disks further increases, the presence of the case becomes a barrier to space efficiency.

### SUMMARY OF THE INVENTION

The present invention has been developed in view of the above circumstances. It is an object of the present invention to provide a disk storage unit, which is capable of storing a great number of disks within a limited space.

The disk storage unit of the present invention comprises:
a case; and
a plurality of sheet-like protective sleeves, each for storing a disk therein; characterized by:
   the protective sleeves being housed within the case; and
   punched apertures that enable filing of the protective sleeves in a binder type filing implement being provided in the protective sleeves.

The plurality of protective sleeves may be housed in the case in a non-fixed manner, or one edge of each of the protective sleeves may be removably affixed to the case. The "non-fixed manner", in which the protective sleeves are housed in the case refers to a state in which the protective sleeves are housed individually as loose items. The manner in which the protective sleeves are "removably affixed" to the case include: affixing with adhesive, which is capable of being peeled off; tearable perforations provided in the protective sleeves; affixing in a manner such that the protective sleeves can be cut away with scissors; and affixing with pressing springs, which are detachable. Two or more punched apertures are provided along a linear edge of each protective sleeve. A binding member, comprising: hollow cylinders having open ends, which are provided in the case at the same interval as that between the punched apertures; and engaging pieces having a plurality of protrusions, which are to be inserted into the hollow cylinders, may be provided in the case. The manner in which the protective sleeves are removably affixed to the case also includes a state in which the hollow cylinders are inserted through the punched apertures then engage the engaging pieces, to bind the protective sleeves within the case.

According to the disk storage unit of the present invention, the punched apertures that enable filing of the protective sleeves in a binding type filing implement are provided in the plurality of protective sleeves. Therefore, in the case that the number of disks increases, the disks can be removed from the case along with the protective sleeves and organized in a filing implement. Thereby, storage of a great number of disks in a limited space is enabled.

In addition, organization and filing of the disks according to users' tastes are also enabled.

### BRIEF DESCRIPTION OF THE DRAWINGS

Figure 1 is a perspective view of an embodiment of the disk storage unit of the present invention, in a closed state.
Figure 2 is a plan view of a protective sleeve for a disk, which is housed within a case illustrated in Figure 1.
Figure 3 is a plan view that illustrates the state in which the disk is removed from the protective sleeve of Figure 2.
Figure 4 is a perspective view of the disk storage unit of Figure 1, in an open state.
Figure 5 is a perspective view that illustrates a state in which the protective sleeve is removed from the case in the state illustrated in Figure 4.
Figure 6 is a perspective view that illustrates a state in which the protective sleeve is filed within a binder.
Figure 7 is an exploded perspective view that illustrates a state in which the protective sleeve is filed within a binder different from that illustrated in Figure 6.
Figure 8 is a plan view that illustrates an alternate embodiment of the protective sleeve.
Figure 9 is an exploded perspective view illustrating another embodiment of the disk storage unit of the present invention, in a state prior to the protective sleeves being housed therein.
Figure 10 is a perspective view that illustrates the disk storage unit of Figure 9, housing the protective sleeves therein.
Figure 11 is a plan view of still another embodiment of the protective sleeve.
Figure 12 is a plan view that illustrates a modification of the protective sleeve of Figure 11.

### DESCRIPTION OF THE PREFERRED EMBODIMENTS

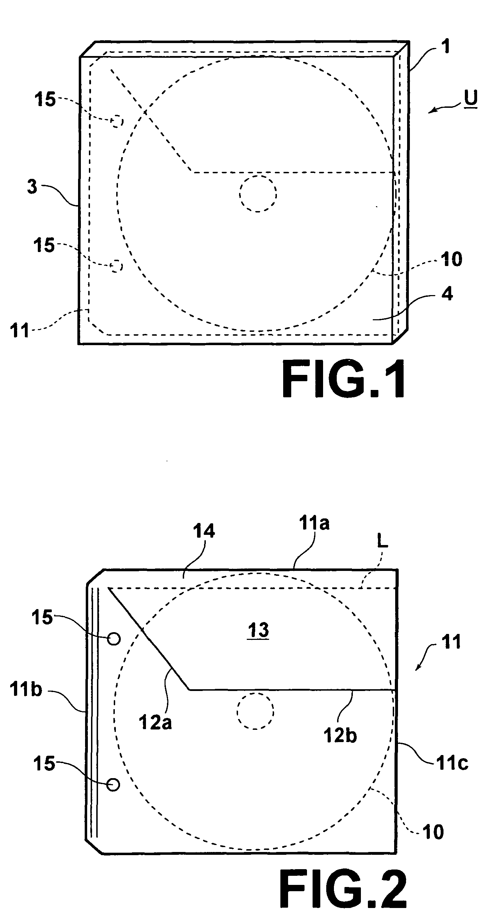

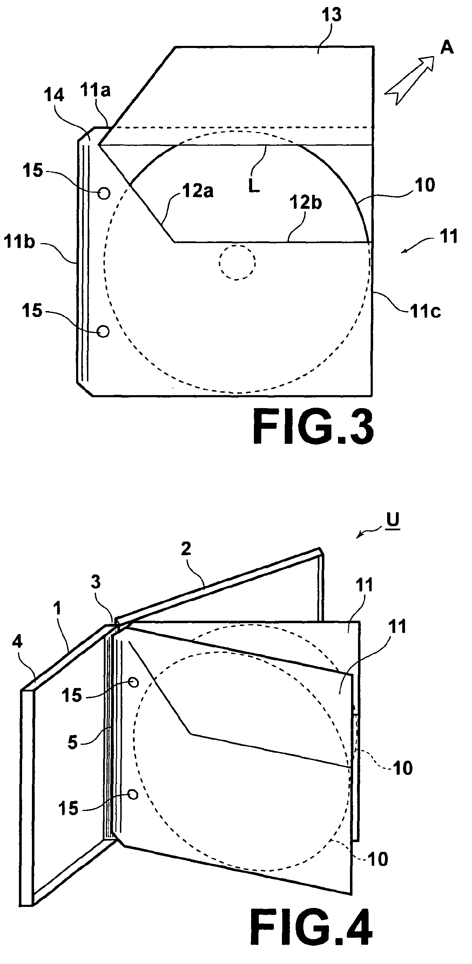

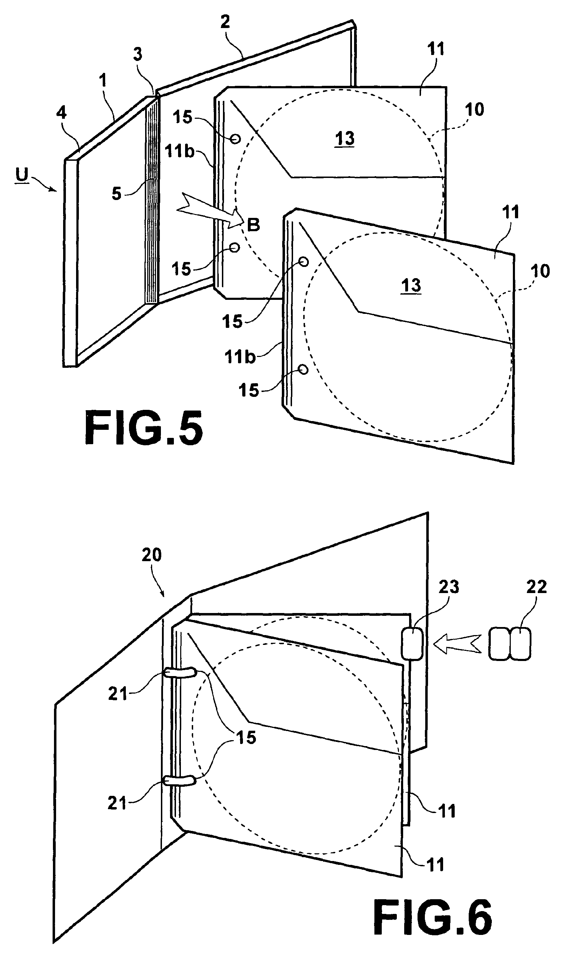

Figure 1 is a perspective view of an embodiment of the disk storage unit of the present invention, in a closed state. Figure 2 is a plan view of a protective sleeve, which is stored within a case illustrated in Figure 1, holding a disk therein. Figure 3 is a plan view that illustrates the state in which the disk is removed from the protective sleeve of Figure 2. Figure 4 is a perspective view of the disk storage unit of Figure 1, in an open state.

As illustrated in Figure 1 and Figure 4, the disk storage unit U comprises a case 1, constituted by: a substantially square case main body 2; and a lid 4, which is linked to an edge of the case main body 2 via a spine portion 3 so as to be openable and closable. The inner surface of the spine portion 3 forms a protective sleeve attaching portion 5 (refer to Figure 4). The two substantially parallel edges of the spine portion 3 constitute hinges of the case main body 2 and the lid 4. A plurality of sheet-like protective sleeves 11, such as that illustrated in Figure 2, each storing a disk 10 therein, are housed within the case 1.

The protective sleeves 11 storing the disks 10 therein are formed as substantially square sheets of nonwoven cloth. Each protective sleeve 11 comprises: an upper edge 11a, a side edge 11b, in which apertures 15, 15 to be described later are provided, a side edge 11c opposite the side edge 11b, and a lower edge.

A linear cut 12a that extends toward the center of the protective sleeve 11 from the vicinity of the upper edge 11a and the side edge 11b is formed in the front side of the protective sleeve 11. A cut 12b that extends from the tip of the cut 12a to the side edge 11c in a line substantially parallel to the upper edge 11a is formed continuously with the cut 12a. Further, the upper portion of the side edge 11c is cut open. An upwardly opening trap door lid 13 that exposes the upper portion of the disk 10 is formed by the cuts 12a, 12b, and the cut open upper portion of the side edge 11c. The trap door lid 13 is opened by bending along a bend line L, which is parallel to the upper edge 11a. A narrow band-like region 14 is formed between the upper edge 11a of the protective sleeve 11 and the bend line L. The band-like region 14 slightly overlaps the upper end of the disk 10.

When removing the disk 10 from the protective sleeve 11, first, the trap door lid 13 is opened as illustrated in Figure 3. Next, the lid 13 is pulled upward and backward toward the rear side of the protective sleeve 11, to move the region 14 from the front side of the disk 10 to the rear side thereof, thereby exposing the upper end of the disk 10. Then, the upper end of the disk 10 is gripped with fingers and pulled diagonally upward toward the right, in the direction of arrow A of Figure 3. That is, the disk 10 is pulled toward the corner between the upper edge 11a and the side edge 11c, to remove the disk 10 from the protective sleeve 11.

Two apertures 15, 15 (punched apertures) are formed in the vicinity of the side edge 11b, with a predetermined interval therebetween. The apertures 15, 15 enable the protective sleeve 11 to be filed in a binding type filing implement (binder). The side edge 11b is attached to the protective sleeve attaching portion 5 at the inner surface of the spine portion 3 via an adhesive, as illustrated in Figure 4.

Accordingly, the protective sleeve 11 can be removed from the case 1, by pulling the protective sleeve 11 in the direction indicated by arrow B of Figure 5, to peel the side edge 11b off of the protective sleeve attaching portion 5.

The protective sleeve 11, which has been removed from the case 1 and which stores a disk 10 therein, can be filed into a commercially available binder 20, by feeding rings 21, 21 through the apertures 15, 15, as illustrated in Figure 6. In this case, commercially available labels 22 may be employed to attach tags 23 on to the protective sleeves 11.

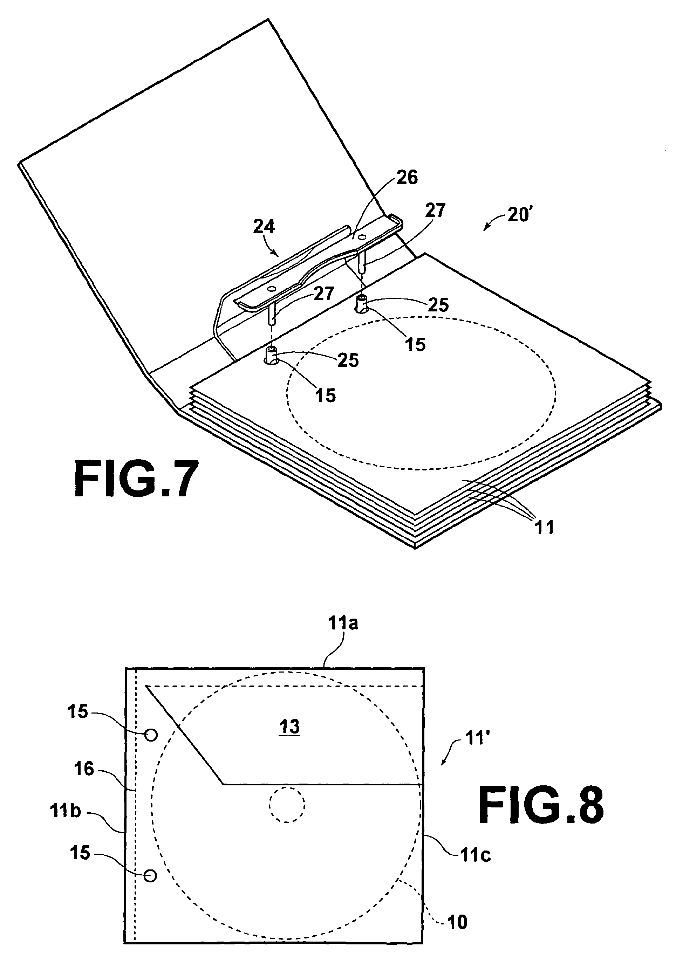

Alternatively, the protective sleeves 11 may be filed in a commercially available binder 20', having a structure such as that illustrated in Figure 7. The binder 20' is equipped with a binding member 24, comprising: hollow cylinders 25, 25 having open ends, the number of which is the same as that of the apertures 15, 15 of the protective sleeves, and which are provided at the same interval as that of the apertures 15, 15; and engaging pieces 26, having rods 27, 27 which are inserted into the hollow cylinders 25, 25 to engage therewith.

In this manner, according to the present embodiment, a plurality of protective sleeves 11 are housed within the case 1 in a non-fixed manner. In addition, the protective sleeves 11 are provided with the apertures 15, which enable filing within the binder 20. Therefore, in the case that the number of disks 10 increases, the disks 10 can be removed from the case 1 along with the protective sleeves 11, and filed in the binder 20. Thereby, storage of a great number of disks 10 within a limited space is enabled. Another advantageous effect, in that classification and filing according to users' tastes is enabled, is also obtained.

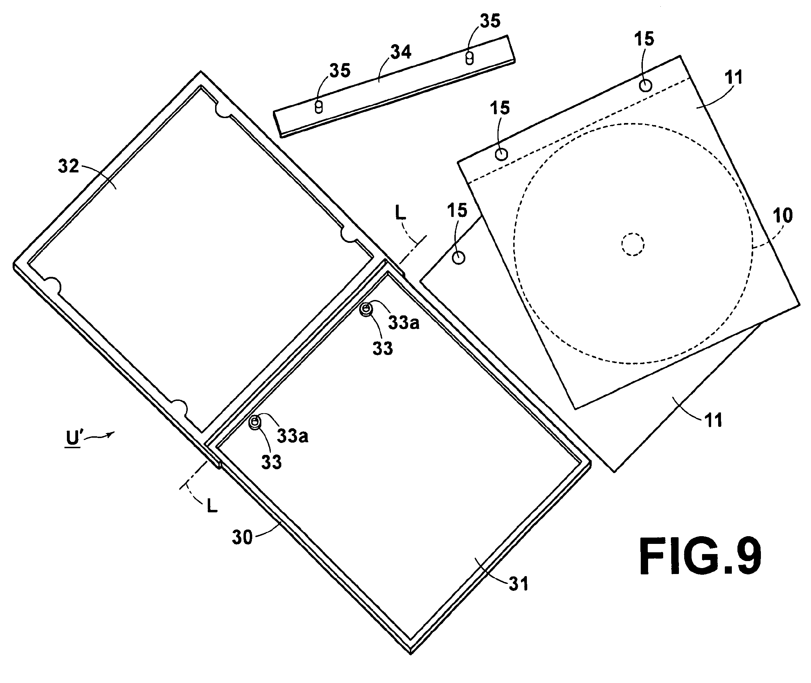

Note that in the embodiment described above, the side edge 11b of the protective sleeve 11 is removably affixed to the case 1 with an adhesive. Alternatively, the side edge 11b of a protective sleeve 11' may be permanently attached to the case 1, while providing perforations 16 parallel to the side edge 11b in the vicinity thereof, as illustrated in Figure 8. The case 1 and the protective sleeve 11' may be separated by tearing along the perforations 16 as necessary. As a further alternative, the perforations 16 need not be provided, and the portion in the vicinity of the side edge 11b may be cut with scissors or the like. As a still further alternative, the protective sleeves 11 may be housed in the case 1 in a non-fixed manner. That is, loose, individual protective sleeves 11 may be housed in the case 1.

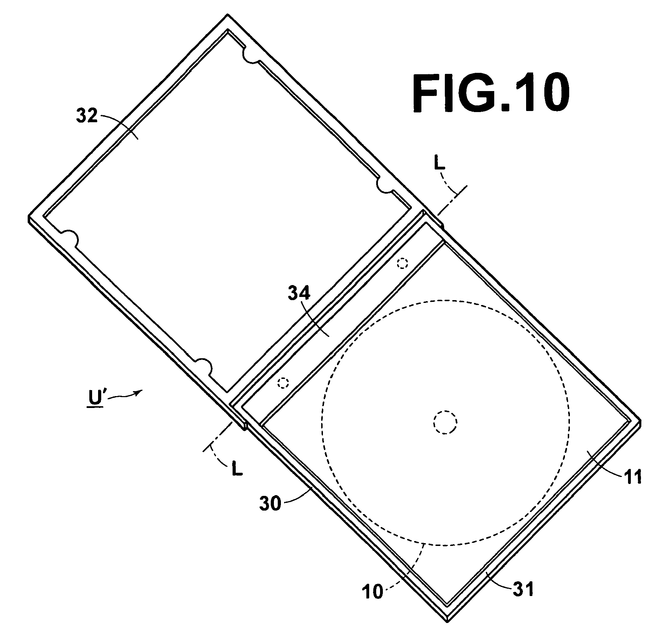

Figure 9 and Figure 10 illustrate another embodiment of the disk storage unit according to the present invention. Figure 9 is an exploded perspective view illustrating another embodiment of the disk storage unit of the present invention, in a state prior to the protective sleeves being housed therein. Figure 10 is a perspective view that illustrates the disk storage unit of Figure 9, housing the protective sleeves therein. The present embodiment is of a housing structure that utilizes the apertures 15, 15 of the protective sleeves 11.

The disk storage unit U' illustrated in Figure 9 comprises a case 30, constituted by: a case main body 31; and a lid member 32, which is axially supported about an axis L so as to be openable and closable. As illustrated in Figure 9, two hollow cylinders 33, 33, which are spaced at an interval and which have outer diameters that enable insertion into the apertures 15, 15 of the protective sleeves 11, are erected on the inner surface of the case main body 31 in the vicinity of an edge that extends along the axis L. An aperture 33a is formed at the end of each hollow cylinder 33. A strip-like engaging plate 34, equipped with protrusions 35, 35, which are capable of being simultaneously inserted into the apertures 33a, 33a, is also provided.

A desired number of protective sleeves 11 having disks stored therein are housed in the case main body 31 such that the hollow cylinders 33, 33 are inserted through the apertures 15, 15. Then, the protrusions 35, 35, of the engaging plate 34 are inserted into the apertures 33a, 33a of the hollow cylinders 33, 33, so as to press the protective sleeves 11 down with the engaging plate 34, as illustrated in Figure 10. Thereafter, the lid member 32 is closed. Thereby, a desired number of protective sleeves 11 having disks stored therein can be housed within the disk storage unit U'.

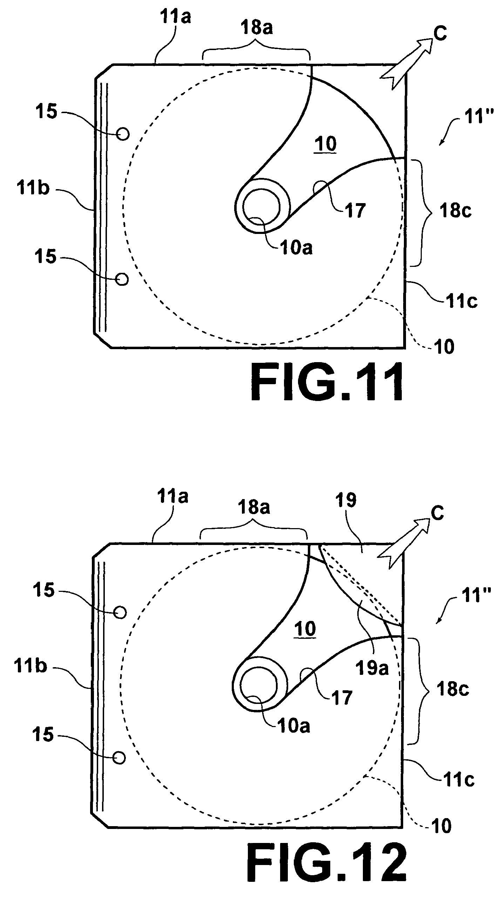

Figure 11 is a plan view that illustrates an alternate embodiment of the protective sleeve. The front side of a protective sleeve 11" is provided with an opening 17 that extends from the corner between the side edge 11c and the upper edge 11a toward the central portion of the disk 10. The side edge 11c is opposite the side edge 11b which is removably affixed to the case 1. A central aperture 10a of the disk 10 is exposed through the opening 17. In addition, the upper edge 11a and the side edge 11c are cut open from the edges of the opening 17 through the ranges denoted by 18a and 18c, respectively. This construction enables a finger to be inserted into the central aperture 10a of the disk 10, to draw the disk 10 out diagonally upward in the direction indicated by arrow C.

Note that in this case, a bag portion 19 having a region 19 that slightly overlaps an edge of the disk 10 may be provided at the corner between the side edge 11c and the upper edge 11a, as illustrated in Figure 12. Thereby, inadvertent removal of the disk 10 from the protective sleeve 11" can be prevented. In this case also, the bag portion 19 can be pulled upward and backward toward the rear side of the protective sleeve 11", to move the region 19 from the front side of the disk 10 to the rear side thereof, thereby exposing the upper right end of the disk 10. Then, the disk can be drawn out in the upper right direction indicated by arrow C.

## Claims

1. A disk storage unit (U), comprising:
a case (1, 30); and
a plurality of sheet-like protective sleeves (11, 11', 11"), each for storing a disk (10) therein; **characterized by**:
each of the protective sleeves (11, 11', 11") being housed within the case (1, 30); and
punched apertures (15, 15) that enable filing of the protective sleeves in a binder type filing implement (20, 20') being provided in the protective sleeves (11, 11', 11").

2. A disk storage unit (U) as defined in Claim 1, wherein:
the protective sleeves (11) are housed within the case (1) in a non-fixed manner.

3. A disk storage unit (U) as defined in Claim 1, wherein:
the protective sleeves (11, 11', 11") are housed within the case (1, 30) in a state that one edge (11b) of each of the protective sleeves (11, 11', 11") is removably affixed to the case (1, 30).

4. A disk storage unit (U) as defined in Claim 3, wherein:
the edge (11b) of each of the protective sleeves (11, 11") is removably affixed to the case (1) by adhesive.

5. A disk storage unit (U) as defined in Claim 3, wherein:
the edge (11b) of each of the protective sleeves (11') is removably affixed to the case (1) by means of tearable perforations (16) provided in the protective sleeves (11') in the vicinity of the edge (11b).
